# EUROPEAN PATENT SPECIFICATION

(11) **EP 4 441 982 B1**
(45) Date of publication and mention of the grant of the patent: **26.08.2026**
(21) Application number: 23781276.3
(22) Date of filing: 27.03.2023
(51) Int. Cl.: H04L 47/2475, H04W 28/02, H04L 47/2483, H04L 47/34, H04L 47/32, H04L 47/10, H04L 47/24, H04L 69/08, H04L 69/22, H04L 67/12

(54) **DEVICE AND METHOD FOR PROCESSING APPLICATION DATA IN WIRELESS COMMUNICATION SYSTEM**
VORRICHTUNG UND VERFAHREN ZUR VERARBEITUNG VON ANWENDUNGSDATEN IN EINEM DRAHTLOSKOMMUNIKATIONSSYSTEM
DISPOSITIF ET PROCÉDÉ POUR LE TRAITEMENT DE DONNÉES D'APPLICATION DANS UN SYSTÈME DE COMMUNICATION SANS FIL

(30) Priority: 28.03.2022 KR 20220038336
(43) Date of publication of application: 09.10.2024
(73) Proprietor: Samsung Electronics Co., Ltd, Suwon-si, Gyeonggi-do 16677 (KR)
(72) Inventor: BAEK, Youngkyo, Suwon-si, Gyeonggi-do 16677 (KR); LEE, Jicheol, Suwon-si, Gyeonggi-do 16677 (KR)
(74) Representative: Gulde & Partner
(86) International application number: PCT/KR2023/004041
(87) International publication number: WO 2023/191421

(56) References cited:
- WO-A1-2011/047575
- WO-A1-2021/093154
- WO-A1-2021/217318
- WO-A2-2021/177716
- US-A1- 2019 191 330
- US-A1- 2021 168 669
- US-A1- 2022 070 738
- HUAWEI, HISILICON, KDDI, CATT, ERICSSON, FUTUREWEI, INTEL, INTERDIGITAL, LENOVO, MOTOROLA MOBILITY, NOKIA, NOKIA SHANGHAI BELL, OP: "New Key Issue: PDU Set integrated packet handling", 3GPP DRAFT; S2-2201808, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. e-meeting; 20220214 - 20220225, 26 February 2022 (2022-02-26), Mobile Competence Centre ; 650, route des Lucioles ; F-06921 Sophia-Antipolis Cedex ; France, XP052119452
- "3rd Generation Partnership Project; Technical Specification Group Services and System Aspects; Policy and charging control framework for the 5G System (5GS); Stage 2 (Release 17)", 3GPP STANDARD; 3GPP TS 23.503, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V17.4.0, 23 March 2022 (2022-03-23), Mobile Competence Centre ; 650, route des Lucioles ; F-06921 Sophia-Antipolis Cedex ; France, pages 1 - 146, XP052144762

## Description

### [Technical Field]

An embodiment relates to a device and method for processing application data in a wireless communication system.

### [Background Art]

5^{th} generation (5G) mobile communication technology defines a wide frequency band to enable fast transmission speed and new services and may be implemented in frequencies below 6GHz ('sub 6GHz'), such as 3.5 GHz, as well as in ultra-high frequency bands ('above 6GHz'), such as 28GHz and 39GHz called millimeter wave (mmWave). Further, 6G mobile communication technology, which is called a beyond 5G system, is considered to be implemented in terahertz bands (e.g., 95GHz to 3 THz) to achieve a transmission speed 50 times faster than 5G mobile communication technology and ultra-low latency reduced by 1/10.

In the early stage of 5G mobile communication technology, standardization was conducted on beamforming and massive MIMO for mitigating propagation pathloss and increasing propagation distance in ultrahigh frequency bands, support for various numerologies for efficient use of ultrahigh frequency resources (e.g., operation of multiple subcarrier gaps), dynamic operation of slot format, initial access technology for supporting multi-beam transmission and broadband, definition and operation of bandwidth part (BWP), new channel coding, such as low density parity check (LDPC) code for massive data transmission and polar code for high-reliable transmission of control information, L2 pre-processing, and network slicing for providing a dedicated network specified for a specific service, so as to meet performance requirements and support services for enhanced mobile broadband (eMBB), ultra-reliable low-latency communications (URLLC), and massive machine-type communications (mMTC).

Currently, improvement and performance enhancement in the initial 5G mobile communication technology is being discussed considering the services that 5G mobile communication technology has intended to support, and physical layer standardization is underway for technology, such as vehicle-to-everything (V2X) for increasing user convenience and assisting autonomous vehicles in driving decisions based on the position and state information transmitted from the VoNR, new radio unlicensed (NR-U) aiming at the system operation matching various regulatory requirements, NR UE power saving, non-terrestrial network (NTN) which is direct communication between UE and satellite to secure coverage in areas where communications with a terrestrial network is impossible, and positioning technology.

Also being standardized are radio interface architecture/protocols for technology of industrial Internet of things (IIoT) for supporting new services through association and fusion with other industries, integrated access and backhaul (IAB) for providing nodes for extending the network service area by supporting an access link with the radio backhaul link, mobility enhancement including conditional handover and dual active protocol stack (DAPS) handover, 2-step RACH for NR to simplify the random access process, as well as system architecture/service fields for 5G baseline architecture (e.g., service based architecture or service based interface) for combining network functions virtualization (NFV) and software-defined networking (SDN) technology and mobile edge computing (MEC) for receiving services based on the position of the UE.

As 5G mobile communication systems are commercialized, soaring connected devices may be connected to communication networks so that reinforcement of the function and performance of the 5G mobile communication system and integrated operation of connected devices are expected to be needed. To that end, new research is to be conducted on, e.g., extended reality (XR) for efficiently supporting, e.g., augmented reality (AR), virtual reality (VR), and mixed reality (MR), and 5G performance enhancement and complexity reduction using artificial intelligence (AI) and machine learning (ML), support for AI services, support for metaverse services, and drone communications.

Further, development of such 5G mobile communication systems may be a basis for multi-antenna transmission technology, such as new waveform for ensuring coverage in 6G mobile communication terahertz bands, full dimensional MIMO (FD-MIMO), array antenna, and large scale antenna, full duplex technology for enhancing the system network and frequency efficiency of 6G mobile communication technology as well as reconfigurable intelligent surface (RIS), high-dimensional space multiplexing using orbital angular momentum (OAM), metamaterial-based lens and antennas to enhance the coverage of terahertz band signals, AI-based communication technology for realizing system optimization by embedding end-to-end AI supporting function and using satellite and artificial intelligence (AI) from the step of design, and next-generation distributed computing technology for implementing services with complexity beyond the limit of the UE operation capability by way of ultrahigh performance communication and computing resources. US 2021/168669 A1 relates to a data transmission method and device. WO 2021/217318 A1 discloses a method and device for adjusting stream media parameter dynamic self-adaptive network.

### [Disclosure of Invention]

### [Technical Problem Solution to Problem]

A QoS policy and packet processing method is required to meet users' perceived performance when ultra high-rate, low-latency communication, such as an XR service, is performed in a wireless communication system. The invention is set out in the appended set of claims.

An embodiment provides a method and device capable of processing application data in a wireless communication system.

An embodiment provides a method and device capable of managing quality-of-service (QoS) for each application service flow in a wireless communication system.

An embodiment provides a method and device capable of applying a QoS policy to each packet including application data based on the importance and correlation of application data in a wireless communication system.

According to an aspect, a method of a network entity in a wireless communication system comprises receiving protocol information on which protocols are used for downlink data encoding in an application service, identifying and detecting information about protocol data unit (PDU) set which the downlink data belong to, based on the protocol information, and transmitting, to a base station, the detected information about PDU set with the downlink data. The protocol information comprises information about a protocol and a data type used for the application service.

According to an aspect, a method of a base station in a wireless communication system comprises receiving information about protocol data unit (PDU) set which downlink data belong to, receiving quality of service (QoS) information, and performing the PDU set based QoS handling based on the PDU set information and the QoS information. The information about PDU set is received from a network entity via a general packet radio service (GPRS) tunneling protocol (GTP) header of each PDU identified as belonging to the PDU set.

According to an aspect, a network entity in a wireless communication system comprises a transceiver and a processor operably coupled to the transceiver, the processor configured to receive protocol information on which protocols are used for downlink data encoding in an application service, identify and detect information about protocol data unit (PDU) set which the downlink data belong to, based on the protocol information, and transmit, to a base station, the detected information about PDU set with the downlink data. The protocol information comprises information about a protocol and a data type used for the application service.

According to an aspect, a base station in a wireless communication system comprises a transceiver and a processor operably coupled to the transceiver, the processor configured to receive information about protocol data unit (PDU) set which downlink data belong to, receive quality of service (QoS) information, and perform the PDU set based QoS handling based on the PDU set information and the QoS information. The information about PDU set is received from a network entity via a general packet radio service (GPRS) tunneling protocol (GTP) header of each PDU identified as belonging to the PDU set.

According to an embodiment, it is possible to enhance users' perceived performance by performing a QoS policy and packet processing at an application level when ultra high-rate, low-latency communication, such as an XR service, is performed in a wireless communication system.

Before undertaking the Mode for Invention below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

### [Brief Description of Drawings]

A more complete appreciation of the disclosure and many of the attendant aspects thereof will be readily obtained as the same becomes better understood by reference to the following detailed description when considered in connection with the accompanying drawings, wherein:
FIG. 1 illustrates a structure of a wireless communication system according to an embodiment of the present disclosure;
FIG. 2 illustrates an example of a GTP header including application level information in a wireless communication system according to an embodiment of the present disclosure;
FIG. 3 illustrates a flowchart of a method for applying application-level QoS information while generating a PDU session in a wireless communication system according to an embodiment of the present disclosure;
FIG. 4 illustrates a flowchart of a method for applying updated QoS information when application-level QoS information is updated for a PDU session generated in a wireless communication system according to an embodiment of the present disclosure;
FIG. 5 illustrates a flowchart of a method for processing packets according to application-level QoS in a wireless communication system according to an embodiment of the present disclosure; and
FIG. 6 illustrates a configuration of an electronic device according to an embodiment of the present disclosure.

### [Mode for Invention]

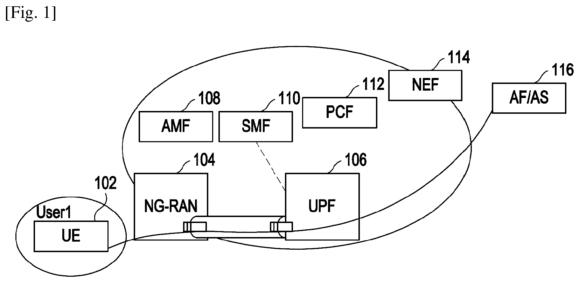

FIGS. 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Hereinafter, the operational principle of the disclosure is described below with reference to the accompanying drawings. When determined to make the subject matter of the disclosure unclear, the detailed of the known functions or configurations may be skipped. The terms as used herein are defined considering the functions in the disclosure and may be replaced with other terms according to the intention or practice of the user or operator. Therefore, the terms should be defined based on the overall disclosure.

For the same reasons, some elements may be exaggerated or schematically shown. The size of each element does not necessarily reflect the real size of the element. The same reference numeral is used to refer to the same element throughout the drawings.

Advantages and features of the disclosure, and methods for achieving the same may be understood through the embodiments to be described below taken in conjunction with the accompanying drawings. However, the scope of the disclosure is not limited to embodiments described herein, but rather, other various changes may be made thereto. Various embodiments are provided for thorough disclosure of the disclosure and making the category of the disclosure known to one of ordinary skill in the art, and the disclosure is defined only by the claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement execution examples, the functions mentioned in the blocks may occur in different orders. For example, two blocks that are consecutively shown may be performed substantially simultaneously or in a reverse order depending on corresponding functions.

As used herein, the term "...unit" means a software element or a hardware element. The '...unit' plays a certain role. However, the term "unit" is not limited as meaning a software or hardware element. A "unit" may be configured in a storage medium that may be addressed or may be configured to reproduce one or more processors. Accordingly, as an example, a "unit" includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. A function provided in an element or a "unit" may be combined with additional elements or may be split into sub elements or sub units. Further, an element or a "unit" may be implemented to reproduce one or more CPUs in a device or a security multimedia card. Further, in an embodiment, a "...unit" may include one or more processors.

In an embodiment, user equipment may be referred to as a UE, a terminal, a mobile station (MS), a cellular phone, a smartphone, a computer, or various devices capable of performing a communication function.

An embodiment may also apply to other communication systems with similar technical background or channel form. Further, an embodiment may be modified in such a range as not to significantly depart from the scope of the disclosure under the determination by one of ordinary skill in the art and such modifications may be applicable to other communication systems.

In a specific description of an embodiment, a communication system may use various wired or wireless communication systems, e.g., the new RAN (NR), which is the radio access network, and the packet core (5G system, or 5G core network, or next generation core (NG core)), which is the core network, according to the 5G communication standard of the 3GPP which is a radio communication standardization organization. An embodiments may also be applicable to communication systems with a similar technical background with minor changes without significantly departing from the scope of the disclosure, and this may be possible under the determination of those skilled in the art to which the disclosure pertains.

As used herein, terms for identifying access nodes, terms denoting network entities (Nes), terms denoting messages, terms denoting interfaces between network functions (NFs), and terms denoting various pieces of identification information are provided as an example for ease of description. Thus, an embodiment is not limited to the terms, and the terms may be replaced with other terms denoting objects with equivalent technical meanings.

The 5G system may support the network slice, and traffic for different network slices may be processed by different protocol data unit (PDU) sessions. The PDU session may mean an association between a data network providing a PDU connection service and a UE. Network slice may be understood as technology for logically configuring a network with a set of network functions (NF) to support various services with different characteristics, such as broadband communication services, massive IoT, V2X, or other mission critical services, and separating different network slices. Therefore, even when a communication failure occurs in one network slice, communication in other network slices is not affected, so that it is possible to provide a stable communication service. In an embodiment, the term "slice" may be interchangeably used interchangeably with "network slice." In such a network environment, the UE may access a plurality of network slices when receiving various services. Further, the network function (NF) may be a software instance running on hardware and be implemented as a virtualized function instantiated on a network element or an appropriate platform.

The mobile communication carrier may constitute the network slice and may allocate network resources suitable for a specific service for each network slice or for each set of network slices. Network resource may refer to an NF or a logical resource provided by the NF or a radio resource allocated by the base station.

For example, a mobile communication carrier may configure network slice A for providing a mobile broadband service, network slice B for providing a vehicle communication service, and network slice C for providing an extended reality (XR) service as described below. In other words, the 5G network may efficiently provide a corresponding service to a UE through a specialized network slice suited for the characteristics of each service. In the 5G system, the network slice may be represented as single-network slice selection assistance information (S-NSSAI). The S-NSSAI may include a slice/service type (SST) value and a slice differentiator (SD) value. The SST may indicate the characteristics of the service supported by the network slice (e.g., enhanced mobile broadband (eMBB), IoT, ultra-reliability low latency communication (URLLC), V2X, XR service etc.). The SD may be a value used as an additional identifier for a specific service referred to as SST.

Examples of services requiring high data rate low latency (HDRLL) may include XR services, augmented reality (AR) services, virtual reality (VR) services, or cloud gaming services. The VR service is a service that provides a virtual environment implemented by a computer device by means of a VR headset or the like. The AR service is a service capable of combining a virtual environment with the real world based on location, geographical information, and the like. The XR service is a service that may not only combine a real environment and a virtual environment but also provide information, such as tactile, auditory, and olfactory senses, to the user, thereby increasing the user's sense of experience.

In an embodiment, an XR service is described as an example communication service providing application-based quality-of-service (QoS). However, an embodiment may also be applicable to various data services, as well as the XR service. Thus, it should be noted that an embodiment is not limited to the XR service.

According to an embodiment, the packet related to the application data unit (ADU) of the application needs to be transferred to the UE according to the nature of the application so as to provide the user with various types of XR service data, such as audio, video, or haptic. When transmission of the packet related to one ADU is not properly performed, and transmission of a preset number (or proportion) of packets fails, it may fail to transfer the ADU information to the user although the packet related to the ADU is transferred to the UE. In this case, if the packets incapable of providing the ADU information to the user although transferred to the UE are stopped from being transferred over the communication network, resources for packet transmission may be saved, contributing to enhancing the performance of the communication network.

Application traffic for serving the user may be created as ADUs according to the characteristics of the media, and packets for transmitting the ADUs may be transmitted through the communication network. ADUs may have correlation based on media characteristics. For example, one ADU may be a high-importance ADU containing information required for the user, and another ADU may not be provided to the user without a high-importance ADU, although the packet related to the other ADU is transmitted to the UE. As such, the correlation and importance of an ADU with respect to another ADU may be determined. For example, when packets of a first ADU are transmitted, packets of a second ADU which has a lower importance and higher correlation than the first ADU may be processed in low priority for scheduling and packet processing, or may be discarded as necessary. As such, packet processing using application-level information allows effective use of network resources, enhancing the user's service experience.

Since the ADU may be regarded as a group of packet data units (PDUs) in light of media unit (MU) or communication network, it may be referred to as a PDU set. In describing an embodiment, the terms "ADU," "MU," and "PDU set" may be interchangeably used, and may basically be understood as the same concept. However, ADU and MU may be used as a unit of application data transferred outside the communication network, and PDU set may be used when the ADU is served inside the communication network.

The packets corresponding to the ADU are based on legacy packet-level QoS processing when served in the communication network, and application-level QoS processing may additionally be applied as necessary. Further, application-level QoS processing may be performed in the communication network. Downlink data include some information in the general packet radio service (GPRS) tunneling protocol (GTP) header of the packet depending on the ADU characteristics in the PDU session anchor (PSA) UPF of the communication network. The information included in the GTP header is used for application-level QoS processing inside the communication network (e.g., UPF or radio access network (RAN)). In the case of uplink data, if the UE sends information about the packet according to the ADU characteristics to the RAN, the RAN may include some information in the GTP header. The information included in the GTP header may be used for application-level QoS processing inside the communication network (e.g., UPF or RAN).

An embodiment is described below with reference to the drawings.

FIG. 1 illustrates a structure of a wireless communication system according to an embodiment of the present disclosure.

Referring to FIG. 1, a wireless communication system may have a network structure indicating a transmission path of application data. For example, the transmission path of the application data may be a transmission path where XR data according to the XR service used by the user (user 1) is transferred from the application function (AF)/application server (AS) 116 through the network generation-radio access network (NG-RAN) 104.

The network technology used in an embodiment may refer to the standards (e.g., TS 23.501, TS 23.502, TS 23.503, etc.) defined by the international telecommunication union (ITU) or 3GPP, and each of the components included in the network architecture of FIG. 1 may mean a physical entity or may mean software that performs an individual function or hardware combined with software. Hereinafter, the components included in the network structure of FIG. 1 are referred to as NFs.

Interfaces known in the 5G core network (5GC) may be used between NFs, which may be known by referring to the standard TS 23.501 and are omitted from the detailed description.

The wireless communication system of FIG. 1 may include an NG-RAN 104 and a 5GC. The NG-RAN 104 may be a base station (e.g., gNB or integrated access and backhaul (IAB)) supporting the radio access technology in the 5G system. The NG-RAN 104 may provide the UEs including XR devices with XR service-related information and/or data transferred from the AF/AS 116 of the external network via the 5GC. Further, the NG-RAN 104 may provide the AF/AS 116 with the XR service-related information and/or data received from the UEs.

In an embodiment, the UE 102 may be wirelessly or wiredly connected with, or include, a plurality of XR devices to perform communication through the 5G system between XR device and AS/AF.

In FIG. 1, the 5GC may include network entities, such as an access and mobility management function (AMF) 108, a session management function (SMF) 110, a user plane function (UPF) 106, a policy control function (PCF) 112, and a unified data management (UDM) (not shown).

The AMF 108 is an entity for managing access and mobility of the UE 102. The AMF 108 may serve as a UE-core network endpoint through which the UE 102 connects with other entity(s) of the 5GC through the NG-RAN 104. As an example, the AMF 108 may perform such network functions as registration of the UE, connection, reachability, mobility management, access identification, authentication, and mobility event generation.

The SMF 110 may perform a management function for a protocol data unit (PDU) session of the UE 102. For example, the SMF 102 may perform such network functions as session management functions of establishing, modifying, or releasing a session and maintaining a tunnel between the UPF 106 and the NG-RAN 104 necessary therefor, the functions of allocating and managing an Internet protocol (IP) address of the terminal, selection and control of the user plane, control of traffic processing on the UPF 106, and billing data gathering control.

The UPF 106 may perform the function of processing user data (e.g., XR data) of the UE 102. The UPF 106 may perform the function of processing XR data to transfer the XR data generated by the UE 102 to the AF/AS 116 or to transfer the data introduced from the AF/AS 116 to the UE 102. The UPF 106 may perform network functions, such as acting as an anchor between radio access technologies (RATs), providing connection with PDU sessions and the AF/AS 116, packet routing and forwarding, packet inspection, application of user plane policy, creating a traffic usage report, or buffering.

The UDM (not shown in figures) may perform functions, such as generating authentication information for 3GPP security, processing the user identifier (ID), managing a list of NFs supporting the UE 102, and managing subscription information. The unified data repository (UDR) may perform the functions of storing and providing subscription information managed by the UDM, structured data for exposure, and application data related to network exposure function (NEF) or service.

The PCF 112 may manage operator policy information for providing a service in the 5G system. The UDR may store subscription information for the UE 102 and may provide the UDM with the stored subscription information. Further, the UDR may store operator policy information and may provide stored operator policy information to the PCF 112.

The NEF 114 may perform the function of transmitting or receiving an event occurring in the 5G system and a supported capability to/from the outside. For example, the NEF 114 may perform functions, such as safe supply of information about of the AF/AS 116 to the 5GC, conversion of internal/external information, and storing in the UDR and then redistributing the information received from other NFs.

The UE 102 may access the NG-RAN 104 and register in the 5G system. For example, the UE 102 may access the NG-RAN 104 to perform a UE registration procedure with the AMF 108. During the registration procedure, the AMF 108 may determine a network slice available to the UE 102 accessing the NG-RAN 104 and allocate the network slice to the UE 102. The UE 102 may select a network slice and establish a PDU session for communication with the AF/AS 116. One PDU session may include one or more quality-of-service (QoS) flows, and each QoS flow may set different parameters to provide a different transmission performance required for each application service.

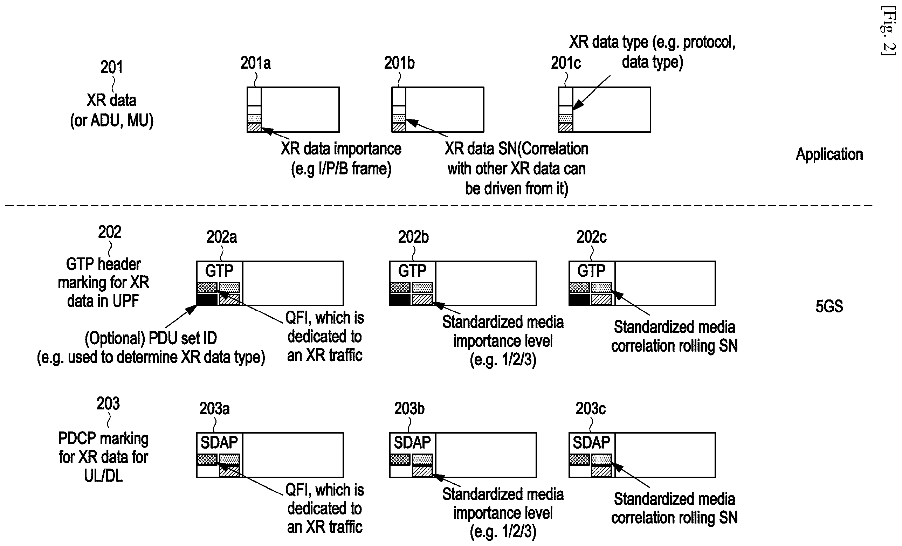

FIG. 2 illustrates an example of a GTP header including application level information in a wireless communication system according to an embodiment of the present disclosure. FIG. 2 is a view illustrating an example method for marking application level information to the GTP header and service data adaptation protocol (SDAP) as the XR data generated from the AS is transferred to the communication network.

Referring to FIG. 2, it is considered that the user's UE uses an XR service.

The data 201 for the XR service may be constituted of packets in the units set by the application and be transferred to the communication network. The set units of packets may be transmitted in ADU, MR, or PDU set units, and each packet header may include information about the application unit.

For example, each packet header may include information indicating the importance of XR data, such as a first packet header 201a. Or, each header packet may include information indicating the ADU sequence number (SN) or a frame capable of indicating XR data correlation, such as a second packet header 201b. Further, each packet header may include XR data type information, such as a third packet header 201c. For example, the XR data type information may include basic information for interpreting the importance of the XR data and SN information in the corresponding packet header, e.g., information about how the XR data has been encoded or what protocol has been adopted for encoding.

Specifically, when real-time video data is XR data, the XR data type information may include transport protocol information (e.g., type of RTP protocol or data encoding protocol) or encoding rate-related information, e.g., information about MPEG-1, H.262/MPEG-2, H.263, H.264/MPEG-4 AVC, or HEVC supporting, e.g., group of picture (GOP).

Further, when XR data is assumed to be encoded in the GOP format, the XR data type information may include at least one of information about what type of frame (e.g., I frame, P frame, or B frame) has been used in the corresponding packet header, information about what number of frame it is, and information about the method and protocol used.

Each packet header may include the ID of the application generating the XR data, in addition to the above-mentioned information.

If arriving at the PDU session anchor (PSA) UPF of the communication network, the XR data may be mapped to the QoS flow based on the legacy per-packet QoS processing scheme and be transmitted from the communication network to the NG-RAN 104 using the GTP protocol. Here, the GTP packet transferred to the GTP tunnel may include a GTP header, and the GTP header may include the QoS flow identifier corresponding to the data included in the GTP packet. The UPF 106 and the NG-RAN 104 may process the packet based on the per-packet QoS policy corresponding to the QFI.

Apart therefrom, if application-level QoS is supposed to be applied to XR data, a marking operation for adding application information obtained from the ADU packet header information to the GTP header may be performed. For example, the UPF 106 may mark the XR data to the GTP header (operation 202).

The UPF 106 may recognize what XR service the ADU is for, based on, e.g., the application ID or source IP address included in the ADU packet header and add a PDU set ID to the GTP header, such as the first GTP header 202a, using the information (e.g., transport protocol type, data encoding protocol type, or encoding rate-related information) included in the ADU packet header.

The PDU set ID may be set as an existing value determined by the communication network itself based on, e.g., XR service transport protocol type (e.g., RTP protocol), data encoding protocol type (e.g., information about MPEG-1, H.262/MPEG-2, H.263, H.264/MPEG-4 AVC, or HEVC supporting, e.g., GOP), or encoding rate-related information, or a value predetermined based on the standard. The application ID along with the PDU set ID may be added to the GTP header, or the application ID value may be included in the PDU set ID which is then added to the GTP header.

Further, importance information may be added to the GTP header, such as the second GTP header 202b, to allow the communication network to be aware of the importance level given for each ADU, based on the transport protocol, data encoding protocol type, or encoding rate-related information. For example, the importance information may include importance level information indicating one of set levels (e.g., gold/silver/bronze or level 1/2/3/4,..).

The inter-ADU correlation information may be added to the GTP header, such as the third GTP header 202c. For example, there may be a correlation, or no correlation, between ADUs depending on the transport protocol, data encoding protocol type, or encoding rate-related information. Accordingly, the SN of each ADU and correlation information according to the importance information may be included in the GTP header based on the transport protocol, data encoding protocol type, or encoding rate-related information. As the second packet header 201b, for the correlation information, the SN of the ADU may be included, as it is, in the GTP header, only a set number of bits from the highest or lowest level of the SN may be included in the GTP header, or the correlation sequence number (SN) may be included in the GTP header.

In relation to the correlation SN, the correlation SN reset to a set value (e.g., 0) may be included in the GTP header for ADUs which have high importance and thus are not significantly correlated with the previous ADU. Further, for ADUs which are correlated with the previous SN and are thus transmitted or data-encoded, a correlation SN increased by a specific value (e.g., by 1) as compared with the correlation Sn of the previous GTP header may be included in the GTP header. Accordingly, the correlation of consecutive GTP packets may be identified based on the correlation SN included in the GTP header.

Unlike the above, the GTP header may include a correlation rolling sequence number (SN). In relation to the correlation rolling SN, for ADUs which have high importance and are not significantly correlated with the previous ADU, the correlation rolling SN set to a value, a first value (e.g., 2) or second value (e.g., 3) larger than the correlation rolling SN of the previous GTP packet may be included in the GTP header. Further, for ADU which are correlated with the previous SN and are thus transmitted or data-encoded, a correlation rolling SN having the same value as the correlation rolling SN of the previous GTP packet may be included in the GTP header. For ADUs which are correlated with the ADU of the previous SN, but the correlation is not very high, a correlation rolling SN increased by a specific value (e.g., by 1) as compared with the correlation rolling SN of the previous GTP packet may be included in the GTP header. Accordingly, the correlation of consecutive GTP packets may be identified based on the correlation rolling SN included in the GTP header. According to an embodiment, if the increased correlation rolling SN is larger than the maximum value that may indicate the correlation rolling SN, the correlation rolling SN may be rolled over and used.

As described above, if application-level QoS is to be applied to XR data, application level information may be included in the GTP header through operation 202. The application level information included in the GTP header may be used to apply the application-level QoS policy to the UPF 106 and the NG-RAN 104.

Meanwhile, the NG-RAN 104 may discard the GTP overhead, include the application level information included in the GTP header in the SDAP to generate a packet data convergence protocol (PDCP) packet, and transfer the generated PDCP packet to the UE 102 (operation 203). The application level information that may be included in the SDAP may include at least one of, e.g., QFI, PDU set ID, application ID, importance information, correlation SN, or correlation rolling SN. FIG. 2 illustrates an example in which a first SDAP 203a, a second SDAP 203b, and a third SDAP 203c each include the QFI, importance information, and correlation rolling SN.

In contrast, when the UE 102 sends XR data to the application server on the uplink, the UE 102 may include at least one of the QFI, PDU set ID, application ID, importance information, correlation SN, or correlation rolling SN determined by the UE in the SDAP to generate a PDCP packet, and transfer the generated PDCP packet to the NG-RAN 104. The NG-RAN 104 may discard the SDAP and the overhead of the PDCP packet transferred from the UE 102, include at least one of the QFI, PDU set ID, application ID, importance information, correlation SN, or correlation rolling SN transferred from the UE 102 in the GTP header to generate a GTP packet, and transfer the generated GTP packet to the UPF 106.

When application-level QoS is to be applied to XR data, the UPF 106 and the NG-RAN 104 may apply the application-level QoS policy using the application level information in the GTP header.

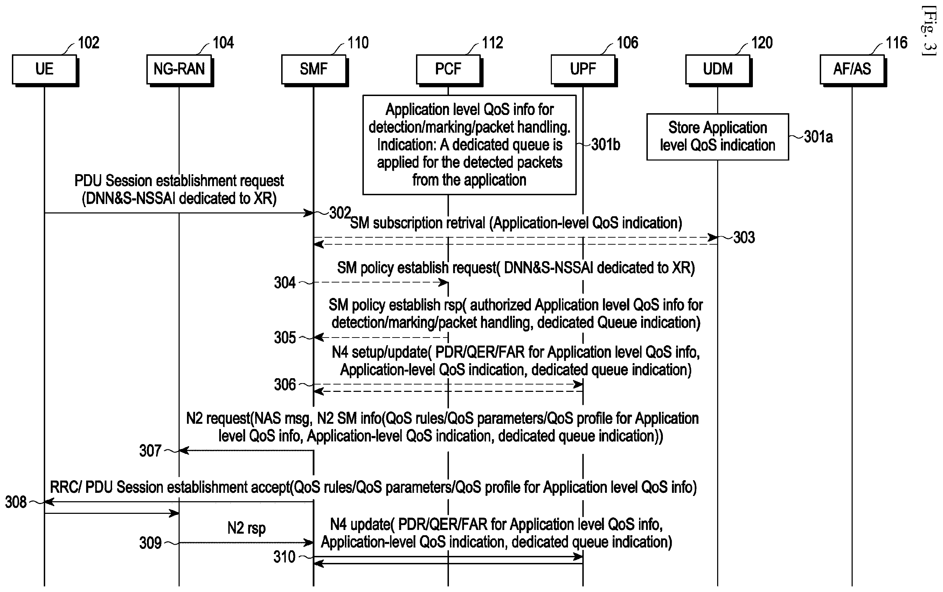

FIG. 3 illustrates a flowchart illustrating a method for applying application-level QoS information while generating a PDU session in a wireless communication system according to an embodiment of the present disclosure.

Referring to FIG. 3, operations of NFs may be performed to provide application-level QoS policy over the communication network based on the characteristics of the application data traffic for an XR service.

In operation 301a, the UDM 120 may store an application-level QoS indication. The application-level QoS indication may indicate whether to apply the application-level QoS to session management subscription information. According to an embodiment, the application-level QoS indication may be limited to be applied to a specific DNN and S-NSSAI. For example, the application-level QoS indication may be applied to the DNN and S-NSSAI for an XR service. The UDM 120 may include information about the application ID to which the application-level QoS is to be applied and may also include application function (AF) specific generic public subscription identifier (GPSI) information to be applied to the application.

In operation 301b, the PCF 112 includes information for applying the application-level QoS. The information for applying the application-level QoS is stored in the UDR. When there is no information for applying the application-level QoS while generating a PDU session, the PCF 112 may request the UDR and obtain application-level QoS information.

The application-level QoS information is policy information about the PDU session and may include an application-level QoS indication indicating whether to apply the application-level QoS. The application-level QoS information may further include application flow detection information for detecting the data flow generated in the application. For example, the application flow detection information may include address information, such as the IP address of the application server, application ID, ADU data type information (e.g., transport protocol information or data encoding protocol type or encoding rate-related information) which is information included in the ADU header.

The application flow detection information may also include information about an authorized PDU set ID indicating what PDU set ID may be allocated to the detected ADU packet.

The application flow detection information may also include a correlation rolling SN threshold or a correlation SN threshold to determine whether the NG-RAN 104 or the UPF 106 is to drop the packet in the communication network depending on the inter-ADU correlation when the application-level QoS is applied. The application flow detection information may also include a correlation SN threshold or correlation rolling SN threshold to determine whether to apply marking to allow the NG-RAN 104 or the UPF 106 to use as information for dropping the packet as necessary.

The application flow detection information may also include a packet level QoS policy including a dedicated queue indicator to apply a dedicated queue to the application for an XR service for discovered packets among the packets generated in the application.

In operation 302, the UE 102 may transmit a PDU session establishment request message to the SMF 104 to receive an XR service. According to an embodiment, the PDU session establishment request message may include an XR-dedicated DNN and an S-NSSAI.

In operation 303, the SMF 110 may obtain SM subscription information from the UDM 120. According to an embodiment, the SM subscription information may include an application-level QoS indication. The SM subscription information may also include an application ID to which the application-level QoS is to be applied. The SMF 110 may obtain AF-specific GPSI information to be applied to the application using the same or different message from the message for obtaining the SM subscription information.

In operations 304 and 305, the SMF 110 may select a PCF 112 based on the XR-dedicated DNN and the S-NSSAI and obtain authorized application-level QoS information through an SM policy association establishment process with the PCF 112.

Specifically, in operation 304, the SMF 110 may transmit an SM policy establishment request message including the XR-dedicated DNN and S-NSSAI to the PCF 112 to request authorized application-level QoS information. In the process of requesting authorized application-level QoS information from the PCF 112, the SMF 110 may transfer the application ID of the UE 102 or the AF-specific GPSI information or SUPI or GPSI information used in the application to the PCF 112.

In operation 305, the PCF 112 may transmit an SM policy establishment response message to the SMF 110. The PCF 112 may transmit the application-level QoS information requested by the SMF 110 to the SMF 110.

If lacking the information requested from the SMF 110, the PCF 112 may request the information from the UDR. The PCF 112 may receive policy information corresponding to the application and the UE 102 from the UDR, obtain the authorized application-level QoS information from the received policy information, and provide the authorized application-level QoS information to the SMF 110.

According to an embodiment, the authorized application-level QoS information is policy information about the PDU session and may include an application-level QoS indication indicating whether to apply the application-level QoS. The authorized application-level QoS information may further include application flow detection information for detecting a flow generated in the application. For example, the application flow detection information may include address information, such as the IP address of the application server, application ID, ADU data type information (e.g., transport protocol information or data encoding protocol type or encoding rate-related information) which is information included in the ADU header.

The application flow detection information may also include information about an authorized PDU set ID indicating what PDU set ID may be allocated to the detected ADU packet.

The application flow detection information may also include a correlation rolling SN threshold or a correlation SN threshold to determine whether the NG-RAN 104 or the UPF 106 is to drop the packet in the communication network depending on the inter-ADU correlation when the application-level QoS is applied. The application flow detection information may also include a correlation SN threshold or correlation rolling SN threshold to determine whether to apply marking to allow the NG-RAN 104 or the UPF 106 to use as information for dropping the packet as necessary.

The application flow detection information may also include packet level QoS policy information including a dedicated queue indicator to apply a dedicated queue to the application for an XR service for discovered packets among the packets generated in the application.

When the SMF 110 and the PCF 112 do not interwork, operations 304 and 305 may be omitted. The SMF 110 may directly store packet-level QoS policy information including the dedicated-queue indicator and application-level QoS information that may be allowed as described above.

Meanwhile, the SMF 110 may generate a packet detection rule (PDR) including a rule for detecting application data including application-level QoS information (hereinafter, referred to as a "rule").

Further, the SMF 110 may generate a forwarding action rule (FAR) including a rule included in the application information in the GTP header when transferring application data, i.e., ADU, through the GTP tunnel and generate a QoS enforcement rule (QER) including a rule for applying QoS to the application level.

In an embodiment, the rule for applying the application-level QoS may be included in the PDR or QER or FAR or be a separate rule and may be transferred to the UPF 106 in operation 306. The UPF 106 may apply the application-level QoS based on the rule. In this case, the SMF 110 may provide a dedicated queue indicator to the UPF 106 through operation 306, indicating that the packet level QoS applies, and the application level QoS, as well as the packet level QoS, applies.

Although the SMF 110 does not have the packet-level QoS policy information including the dedicated queue indicator or fails to receive the packet-level QoS policy information from the PCF 112, if the SMF 110 recognizes that the application-level QoS applies, the SMF 110 may inform the UPF 106 of the packet level QoS to include the dedicated queue indicator.

The rule for detecting application data is a rule based on authorized application level QoS information and may include, e.g., application flow detection information. For example, the application flow detection information may include address information, such as the IP address of the application server, application ID, ADU data type information (e.g., transport protocol information or data encoding protocol type or encoding rate-related information) which is information included in the ADU header.

Accordingly, when the ADU data type information, e.g., real-time video data, is XR data, information in the ADU packet header (e.g., the first packet header 201a, second packet header 201b, or third packet header 201c of FIG. 2) may be obtained from transport protocol information (e.g., RTP protocol or data encoding protocol type) or encoding rate-related information, e.g., information about MPEG-1, H.262/MPEG-2, H.263, H.264/MPEG-4 AVC, or HEVC supporting, e.g., GOP.

Accordingly, the SMF 110 may determine what authorized PDU set ID the detected ADU packet corresponds to, based on the ADU data type information. Further, the SMF 110 may determine importance information about the GTP header by obtaining importance information about media from the ADU packet header (e.g., the first GTP header 202a, second GTP header 202b, or third GTP header 202c of FIG. 2) based on the ADU data type information. Further, the SMF 110 may obtain the SN of the ADU from the ADU packet header to determine the correlation SN for the GTP header.

The PDU set ID, PDU set importance information and PDU set correlation SN determined based on the ADU data type information may be set to exhibit the same value according to the same method by the SMF 110, the UPF 106, and the UE 102.

As described above, the UPF 106 and the NG-RAN 104 may provide application-level QoS considering the PDU set and application ID marked (included) in the GTP header. To that end, the SMF 110 may transmit the packet-level QoS policy information including the dedicated queue indicator to the UPF 106 in operation 306. Further, the SMF 110 may transmit the application QoS indicator to the UPF 106 in operation 306, indicating that the application-level QoS applies in addition to the packet-level QoS.

Similarly, in operation 307, the SMF 110 may transmit an N2 request message including N2 SM information to the NG-RAN 104. Communication between the SMF 110 and the NG-RAN 104 may be performed through the AMF 108. The N2 SM information may include an application-level QoS indication to indicate that application-level QoS applies, in addition to the packet-level QoS and packet-level QoS policy information including the dedicated queue indicator. Although the SMF 110 does not have the packet-level QoS policy information including the dedicated queue indicator or fails to receive the information from the PCF 112, if the SMF 110 recognizes that the application QoS applies, the SMF 110 may transmit the packet-level QoS information including the dedicated queue indicator to the NG-RAN 104.

If the packet-level QoS policy including the dedicated queue indicator is applied along with the application QoS, although the application ID is omitted in the GTP header, application-level QoS may be applied for each application.

The SMF 110 may further include packet processing reference information in the N2 SM information about the NG-RAN 104 of operation 307 and the message transmitted to the UPF 106 in operation 306. The packet processing reference information may indicate reference information to process the packet to apply the application-level QoS policy and packet-level QoS policy to the packet. The packet processing reference information may be transmitted to the UPF 106, as the N4 rule in operation 306 and, in operation 307, it may be included in the QoS rule or QoS parameter information and transmitted to the NG-RAN 104.

The packet processing reference information may include information indicating whether to drop, or mark to drop in an emergency, the PDU set having the same or relatively low importance level and high correlation when a certain PDU set is not properly transferred. For example, the packet processing reference information may include a threshold for a communication difference value or an indicator to indicate whether to drop or mark to determine a PDU set having a high correlation.

When the UPF 106 and the NG-RAN 104 fail to receive the packet processing reference information, the threshold (e.g., 1) set when the application-level QoS is applied may be used, and the operation (e.g., drop) set to the PDU set having the same or low level and high correlation may be performed.

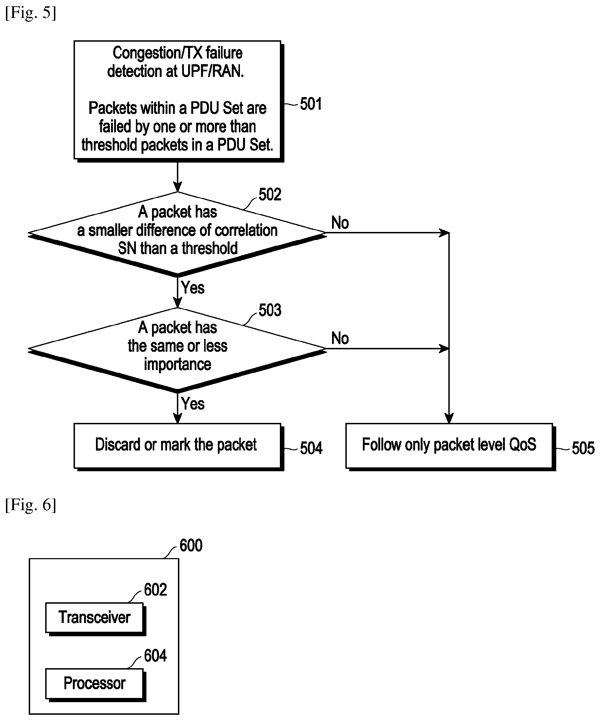

The procedure in which the NG-RAN 104 and the UPF 106 apply the application-level QoS is described below with reference to FIG. 5.

Meanwhile, the NG-RAN 104 may transfer the received N2 request message to the UE 102 in operation 307. For example, in operation 308, the NG-RAN 104 may include a PDU session establishment accept message in the RRC message and transmit the PDU session establishment accept message to the UE 102.

The SMF 110 may generate a PDU session establishment accept message to be transmitted to the UE 102 and transfer the generated message to the AMF 108 in operation 307. The AMF 108 may include the received message in the N2 request message and transmit the received message to the NG-RAN 104.

As such, the SMF 110 may transmit the generated message to the AMF 108, and the AMF 108 may include the message received from the SMF 110 in the N2 request message through the N2 interface and transmit the message to the NG-RAN 104. Then, the NG-RAN 104 may include the PDU session establishment accept message in the RRC message and transfer the PDU session establishment accept message to the UE 102.

If a resource of the NG-RAN 104 is determined in the RRC process, the SMF 110 may receive an N2 response message including information about the determined resource from the NG-RAN 104 in operation 309. The SMF 110 transmits an N4 update message to the UPF 106 based on the received N2 response message in operation 310. The N4 update message may include N4 rules for application-level QoS.

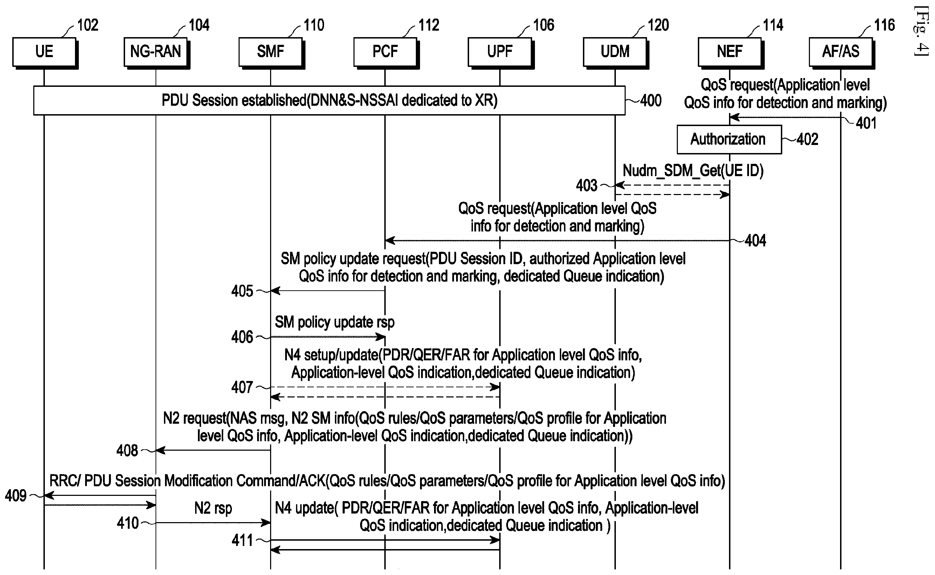

FIG. 4 illustrates a flowchart of a method for applying updated QoS information when application-level QoS information is updated for a PDU session generated in a wireless communication system according to an embodiment of the present disclosure.

Referring to FIG. 4, in operation 400, a PDU session for S-NSSAI and DNN for an XR service may be established.

In operation 401, when the AF/AS 116 updates the QoS policy for the XR service, the AF/AS 116 may transmit a QoS request message including the updated QoS information to the NEF 114. The QoS request message may include information about the UE 102 (e.g., the UE's IP address or AF-specific GPSI information) and application-level QoS information for applying the application-level QoS.

The application-level QoS information may include, e.g., an application-level QoS indication indicating whether to apply the application-level QoS. The application-level QoS information may further include application flow detection information for detecting the data flow generated in the application. For example, the application flow detection information may include address information, such as the IP address of the application server, application ID, ADU data type information (e.g., transport protocol information or data encoding protocol type or encoding rate-related information) which is information included in the ADU header.

The application flow detection information may also include information about an authorized PDU set ID indicating what PDU set ID may be allocated to the detected ADU packet.

The application flow detection information may also include a correlation rolling SN threshold or a correlation SN threshold to determine whether the NG-RAN 104 or the UPF 106 is to drop the packet in the communication network depending on the inter-ADU correlation when the application-level QoS is applied. The application flow detection information may also include a correlation SN threshold or correlation rolling SN threshold to determine whether to apply marking to allow the NG-RAN 104 or the UPF 106 to use as information for dropping the packet as necessary.

The application flow detection information may also include a packet level QoS policy including a dedicated queue indicator for an XR service for discovered packets among the packets generated in the application.

In operation 402, upon receiving the QoS request message from the AF/AS 116, the NEF 114 may perform an authority check on the request of the AF/AS 116.

In operation 403, the NEF 114 may obtain ID information about the UE 102 corresponding to the AF-specific GPSI through communication with the UDM 120 to obtain ID information (e.g., SUPI information) about the UE 102.

The NEF 114 may select the PCF 112 to serve the DNN and S-NSSAI for the XR service provided to the UE 102 based on the ID of the UE 102. The NEF 114 may transmit the updated QoS information to the selected PCF 112. Or, the NEF 114 may select the PCF 112 based on the IP address of the UE 102 and, in operation 404, transmit the updated QoS information to the selected PCF 112.

The PCF 112 may receive the updated QoS information through operation 404 and, in operation 406, transmit an SM policy update request message including the updated QoS information to the SMF 110. In other words, the PCF 112 may transmit the updated QoS information for the corresponding PDU session to the SMF 110.

The PCF 112 may obtain the authorized application-level QoS information through the SM policy association update process. For example, the authorized application-level QoS information is policy information about the PDU session and may include an application-level QoS indication indicating whether to apply the application-level QoS. The authorized application-level QoS information may further include application flow detection information for detecting a flow generated in the application. For example, the application flow detection information may include address information, such as the IP address of the application server, application ID, ADU data type information (e.g., transport protocol information or data encoding protocol type or encoding rate-related information) which is information included in the ADU header. The application flow detection information may also include information about an authorized PDU set ID indicating what PDU set ID may be allocated to the detected ADU packet.

The application flow detection information may also include a correlation rolling SN threshold or a correlation SN threshold to determine whether the NG-RAN 104 or the UPF 106 is to drop the packet in the communication network depending on the inter-ADU correlation when the application-level QoS is applied. The application flow detection information may also include a correlation SN threshold or correlation rolling SN threshold to determine whether to apply marking to allow the NG-RAN 104 or the UPF 106 to use as information for dropping the packet as necessary.

The application flow detection information may also include a packet level QoS policy including a dedicated queue indicator for an XR service for discovered packets among the packets generated in the application.

Operations 407 to 411 may be performed in a similar manner to the operation for applying the application-level QoS except that in operations 306 to 310 of FIG. 3, the SMF 110 transmits a PDU session modification command message for modifying the PDU session, instead of sending the PDU session establishment accept message, and a detailed description thereof is omitted.

Meanwhile, similar to the PDU session establishment accept message of FIG. 3, the PDU session modification command message of FIG. 4 may be a message that is generated by the SMF 110 and transmitted to the UE 102 through the AMF 108 and the NG-RAN 104.

FIG. 5 illustrates a flowchart of a method for processing packets according to application-level QoS in a wireless communication system according to an embodiment of the present disclosure.

According to an embodiment, a packet processing method may include an operation for applying an application-level QoS to process packets in a packet processing device (e.g., the UPF 106 and/or NG-RAN 104). For example, upon receiving the application-level QoS indication indicating to apply the application-level QoS, the packet processing device may perform application-level QoS processing on the packet.

Referring to FIG. 5, the packet processing device, such as the UPF 106 and/or the NG-RAN 104, may detect packet transmission delay or congestion, and/or transmission failure in operation 501. In other words, the packet processing device may detect which PDU set of packets fail in transmission and/or whether congestion occurs in the packet transmission process. For example, when the packets of the first PDU set fail in transmission or experience congestion by a threshold number of times or more or a threshold ratio (%) or more, the packet processing device may recognize that transmission of the first PDU set fails.

In operations 502 and 503, the packet processing device may perform a correlation check to identify the packets corresponding to the PDU set having correlation with the first PDU set and an importance check to identify a PDU set having the same or lower importance level than the first PDU set.

For example, upon identifying a packet having a difference in correlation SN with the first PDU set packets, smaller than the threshold in operation 502, the packet processing device may determine that the packet identified in operation 503 is a packet having correlation and perform an importance check on it. Further, upon identifying a packet having a difference in correlation SN with the first PDU set packets, equal to or larger than the threshold in operation 502, the packet processing device does not determine that the identified packet is a packet having correlation and, in operation 505, the packet processing device may perform only packet-level QoS processing without application-level QoS processing.

In operation 503, the importance check may be performed based on whether it is a packet having the same importance level as the first PDU set packets. Upon identifying a packet having the same or lower importance level than the first PDU set packet, the packet processing device may drop or discard the packet identified in operation 504. Or, upon identifying a packet having the same or lower importance level than the first PDU set packet, the packet processing device may perform a marking operation of adding information indicating that the identified packet may be dropped or discarded as necessary to the header.

In operation 503, upon identifying a packet having a higher importance level than the first PDU set packet, the packet processing device may apply only packet-level QoS without performing application-level QoS processing in operation 505.

According to an embodiment, operations 502 and 503 may be reversed in order. In other words, unlike that shown in FIG. 5, operation 502 may be performed after operation 503.

According to an embodiment, with application-level QoS processing not performed, packet-level QoS processing alone may be performed on the packets of the PDU set which do not meet the conditions of operations 502 and 503.

According to an embodiment, the application-level QoS processing method shown in FIG. 5 may be applied in the order of the PDU sets detected by the UPF 106 and the NG-RAN 104.

FIG. 6 illustrates a configuration of an electronic device according to an embodiment of the present disclosure.

According to various embodiments, an electronic device 600 shown in FIG. 6 may be any one device among the devices shown in FIG. 1 (UE 102, NG-RAN 104, UPF 106, AMF 108, SMF 110, PCF 112, NEF 114, and AF/AS 116).

Referring to FIG. 6, the electronic device 600 may include a transceiver 602 and a processor 604.

The transceiver 602 may transmit/receive signals or messages to/from at least one other device.

The processor 604 (e.g., controller) may control the transceiver 602 and perform operations based on at least one of various embodiments as described above. The processor 604 may include an application processor and a communication processor.

The transceiver 602 and the processor 604 are not necessarily implemented as separate modules but rather as a single component, e.g., a single chip. The transceiver 602 and the processor 604 may be electrically connected with each other. In an embodiment, the processor 604 may indicate a circuit, an application-specific circuit, or at least one processor. The operations of the electronic device 600 may be realized by including a memory device storing a corresponding program code in the electronic device 600 (e.g., the processor 604 and/or another component not shown).

Although specific embodiments of the disclosure have been described above, various changes may be made thereto without departing from the scope of the disclosure. Thus, the scope of the disclosure should not be limited to the above-described embodiments, and should rather be defined by the following claims.

Although the present disclosure has been described with various embodiments, various changes and modifications may be suggested to one skilled in the art. It is intended that the present disclosure encompass such changes and modifications as fall within the scope of the appended claims.

## Claims

1. A method by packet data unit session anchor user plane function, PSA UPF, in a wireless communication system, the method comprising:
receiving control information related to application data, wherein the application data is associated with a protocol data unit, PDU, set;
determining PDU set information related to the PDU set, based on the control information related to the application data, wherein the control information comprises downlink, DL, transport protocol information;
marking the PDU set information in a general packet radio service tunneling protocol, GTP, header;
and
transmitting, to a base station, the PDU set information,
wherein the PDU set comprises one or more PDUs for the application data.

2. The method of claim 1, wherein the PDU set information includes at least one of importance information of the PDU set and sequence number, SN, of the PDU set.

3. The method of claim 1, further comprising:
in case that congestion in packet transmission is detected, discarding the PDU set, based on importance information of the PDU set.

4. The method of claim 2, the DL transport protocol information is received from a policy control function, PCF.

5. The method of claim 1, wherein the application data is for an extended reality, XR, service.

6. The method of claim 1, wherein the one or more PDUs comprise various types of the application data.

7. A packet data unit session anchor user plane function, PSA UPF, entity in a wireless communication system, the PSA UPF entity comprising:
a transceiver (602); and
a processor (604) operably coupled to the transceiver (602), the processor (604) configured to:
receive control information related to application data, wherein the application data is associated with a protocol data unit, PDU, set,
determine PDU set information related to the PDU set, based on the control information related to the application data, wherein the control information comprises downlink, DL, transport protocol information,
mark the PDU set information in a general packet radio service tunneling protocol, GTP, header,
and
transmit, to a base station, the PDU set information,
wherein the PDU set comprises one or more PDUs for the application data.

8. The PSA UPF of claim 7, wherein the PDU set information includes at least one of importance information of the PDU set and sequence number, SN, of the PDU set.

9. The PSA UPF entity of claim 7, the processor (604) further configured to:
in case that congestion in packet transmission is detected, discard the PDU set, based on the importance information of the PDU set.

10. The PSA UPF of claim 7, the DL transport protocol information is received from a policy control function, PCF.

11. The PSA UPF entity of claim 7, wherein the application data is for an extended reality, XR, service.

12. The PSA UPF entity of claim 7, wherein the one or more PDUs comprise various types of the application data.

## Patentansprüche

1. Verfahren mittels einer Paketdaten-Einheitssitzungsanker-Benutzerebenenfunktion, PSA UPF, in einem drahtlosen Kommunikationssystem, wobei das Verfahren umfasst:
Empfangen von Steuerinformationen, die sich auf Anwendungsdaten beziehen, wobei die Anwendungsdaten einem Protokolldateneinheits-, PDU,-Satz zugeordnet sind;
Bestimmen von PDU-Satz-Informationen, die sich auf den PDU-Satz beziehen, basierend auf den Steuerinformationen, die sich auf die Anwendungsdaten beziehen, wobei die Steuerinformationen Downlink-, DL,-Transportprotokoll-Informationen umfassen,
Markieren der PDU-Satz-Informationen in einem allgemeinen Paket-Funkdienst-Tunneling-Protokoll-, GTP,-Header; und
Übertragen der PDU-Satz-Informationen an eine Basisstation,
wobei der PDU-Satz eine oder mehrere PDUs für die Anwendungsdaten umfasst.

2. Verfahren nach Anspruch 1, wobei die PDU-Satz-Informationen mindestens eine von Wichtigkeitsinformationen des PDU-Satzes und einer Sequenznummer, SN, des PDU-Satzes umfassen.

3. Verfahren nach Anspruch 1, ferner umfassend:
falls eine Überlastung bei der Paketübertragung erfasst wird, Verwerfen des PDU-Satzes basierend auf den Wichtigkeitsinformationen des PDU-Satzes.

4. Verfahren nach Anspruch 2, wobei die DL-Transportsteuerinformationen von einer Richtlinien-Steuerungsfunktion, PCF, empfangen werden.

5. Verfahren nach Anspruch 1, wobei die Anwendungsdaten für einen Extended Reality-, XR,-Dienst sind.

6. Verfahren nach Anspruch 1, wobei die eine oder mehrere PDUs verschiedene Arten von Anwendungsdaten umfassen.

7. Paketdateneinheits-Sitzungsanker-Benutzerebenenfunktions-, PSA UPF,-Einheit in einem drahtlosen Kommunikationssystem, wobei die PSA UPF-Einheit umfasst:
einen Transceiver (602); und
einen Prozessor (604), der betriebsfähig mit dem Transceiver (602) gekoppelt ist, wobei der Prozessor (604) konfiguriert ist zum:
Empfangen von Steuerinformationen, die sich auf Anwendungsdaten beziehen, wobei die Anwendungsdaten einem Protokolldateneinheits-, PDU,-Satz zugeordnet sind,
Bestimmen von PDU-Satz-Informationen, die sich auf den PDU-Satz beziehen, basierend auf den Steuerinformationen, die sich auf die Anwendungsdaten beziehen, wobei die Steuerinformationen Downlink-, DL,-Transportprotokoll-Informationen umfassen,
Markieren der PDU-Satz-Informationen in einem allgemeinen Paket-Funkdienst-Tunneling-Protokoll-, GTP,-Header; und
Übertragen der PDU-Satz-Informationen an eine Basisstation,
wobei der PDU-Satz eine oder mehrere PDUs für die Anwendungsdaten umfasst.

8. PSA UPF nach Anspruch 7, wobei die PDU-Satz-Informationen mindestens eine von Wichtigkeitsinformationen des PDU-Satzes und einer Sequenznummer, SN, des PDU-Satzes umfassen.

9. PSA-UPF-Einheit nach Anspruch 7, wobei der Prozessor (604) ferner konfiguriert ist zum:
falls eine Überlastung bei der Paketübertragung erfasst wird, Verwerfen des PDU-Satzes basierend auf den Wichtigkeitsinformationen des PDU-Satzes.

10. PSA UPF nach Anspruch 7, wobei die DL-Transportprotokollinformationen von einer Richtlinien-Steuerungsfunktion, PCF, empfangen werden.

11. PSA UPF-Einheit nach Anspruch 7, wobei die Anwendungsdaten für einen Extended Reality-, XR,-Dienst sind.

12. PSA UPF-Einheit nach Anspruch 7, wobei die eine oder mehrere PDUs verschiedene Arten von Anwendungsdaten umfassen.

## Revendications

1. Procédé par une fonction de plan d'utilisateur d'ancrage de session d'unité de données par paquets UPF PSA, dans un système de communication sans fil, le procédé comprenant :
recevoir des informations de commande relatives à des données d'application, les données d'application étant associées à une unité de données de protocole, PDU ;
déterminer des informations d'ensemble de PDU, en se basant sur les informations de commande relatives aux données d'application, les informations de commande comprenant des informations de protocole de transport de la liaison descendante, DL ;
marquer les informations d'ensemble de PDU dans un en-tête de protocole de tunnelage de service radio par paquets généraux, GTP ; et
transmettre à la station de base les informations d'ensemble de PDU,
dans lequel l'ensemble de PDU comprend une ou plusieurs PDU pour les données d'application.

2. Procédé de la revendication 1, dans lequel les informations d'ensemble de PDU comprennent au moins un parmi des informations d'importance de l'ensemble de PDU et du numéro de séquence, SN, de l'ensemble de PDU.

3. Procédé de la revendication 1, comprenant en outre :
en cas de détection d'une congestion dans la transmission des paquets, rejeter l'ensemble de PDU, en se basant sur les informations d'importance de l'ensemble de PDU.

4. Procédé de la revendication 2, les informations de protocole de transport DL étant reçues depuis une fonction de commande de politique, PCF.

5. Procédé de la revendication 1, dans lequel les données d'application concernent un service de réalité étendue, XR.

6. Procédé de la revendication 1, dans lequel l'une ou les plusieurs PDU comprennent différents types de données d'application.

7. Entité de fonction de plan d'utilisateur d'ancrage de session d'unité de données par paquets, UPF PSA, dans un système de communication sans fil, l'entité UPF PSA comprenant :
un émetteur-récepteur (602) ; et
un processeur (604) couplé de manière opérationnelle à l'émetteur-récepteur (602), le processeur (604) étant configuré pour :
recevoir des informations de commande relatives à des données d'application, les données d'application étant associées à une unité de données de protocole, PDU,
déterminer des informations d'ensemble de PDU, en se basant sur les informations de commande relatives aux données d'application, les informations de commande comprenant des informations de protocole de transport de la liaison descendante, DL,
marquer les informations d'ensemble de PDU dans un en-tête de protocole de tunnelage de service radio par paquets généraux, GTP, et
transmettre à la station de base les informations d'ensemble de PDU,
dans laquelle l'ensemble de PDU comprend une ou plusieurs PDU pour les données d'application.

8. UPF PSA de la revendication 7, dans laquelle les informations d'ensemble de PDU au moins un parmi des informations d'importance de l'ensemble de PDU et du numéro de séquence, SN, de l'ensemble de PDU.

9. Entité UPF PSA de la revendication 7, le processeur (604) étant en outre configuré pour :
en cas de détection d'une congestion dans la transmission des paquets, rejeter l'ensemble de PDU, en se basant sur les informations d'importance de l'ensemble de PDU.

10. UPF PSA de la revendication 7, les informations du protocole de transport DL étant reçues depuis une fonction de commande de politique, PCF.

11. Entité UPF PSA de la revendication 7, dans laquelle les données d'application concernent un service de réalité étendue, XR.

12. Entité UPF PSA de la revendication 7, dans laquelle l'une ou les plusieurs PDU comprennent différents types de données d'application.
